# EUROPEAN PATENT SPECIFICATION

(11) **EP 4 528 115 B1**
(45) Date of publication and mention of the grant of the patent: **15.07.2026**
(21) Application number: 24315406.9
(22) Date of filing: 02.09.2024
(51) Int. Cl.: F16B 5/06, F16B 21/02

(54) **TORSION CLIP**
TORSIONSKLEMME
PINCE DE TORSION

(30) Priority: 21.09.2023 FR 2310000
(43) Date of publication of application: 26.03.2025
(73) Proprietor: Illinois Tool Works Inc., Glenview, IL 60025 (US)
(72) Inventor: Leverger, Eric, Glenview, IL 60025 (US)
(74) Representative: HGF

(56) References cited:
- EP-A1- 3 812 599
- WO-A1-2022/164919
- GB-A- 2 569 316

## Description

### TECHNICAL FIELD

The application relates to a torsion clip.

### BACKGROUND

In vehicle production lines efficiency of the production process is key to high throughput. There is therefore a desire to reduce the time required for production. One area that is problematic are fixations that require assembly (in the case of a nut to a bolt) and then special tools, or tools in generally, to make a secure fastening. These steps can be time consuming and require an operative to move about to and from a tool storage to the vehicle in production for example.

The same problem is also observed with additives or chemical fixatives in the production line, it is therefore perforable to avoid the use of such solutions.

As ongoing maintenance of vehicles is required and desirable over the life of the vehicle one-way fixings are undesirable as they cannot be reused.

Where removable fixings are used, after a period of time, they may become difficult to remove, either through corrosion, deformation, or where the fixing is biased towards towards an engaged position an operative may need to maintain a pressure on the fixing in order to achieve removal, which is awkward. Reference is made to documents WO2022164919A1, GB2569316A and EP3812599A1.

### SUMMARY OF THE INVENTION

According to the disclosure there is provided a torsion clip comprising a latch, the latch being rotateable between an engaged position and a disengaged position, wherein the latch is biased towards the engaged position, the latch comprising four gripping surfaces arranged in two opposing pairs, the two opposing pairs arranged perpendicular to one another, and at least one stop arranged in opposition to the gripping surfaces. Providing two opposing pairs arranged perpendicularly to one another means that the torsion clip, when in the engaged position, makes four independent points of contact with a substrate via the gripping surfaces. To be clear, two opposing pairs arranged perpendicular to one another means that the gripping surfaces are arranged such that their position is described and/or approximated by the vertices of a quadrilateral (such as a square), with the opposing pairs being located diagonally across the quadrilateral. Each opposing pair comprises two of the four gripping surfaces. "Opposing" here does not mean that the gripping surfaces of the relevant opposing pair face one another, the gripping surfaces may be arranged to face away from one another. Opposing here is used as a description of the location of one gripping surface relative to the second gripping surface in the particular opposing pair. Biasing the latch towards the engaged position ensures that the latch may not unintentionally be placed in the disengaged position. Furthermore, the torsion clip may be provided with a snap-fit function such that the torsion clip automatically enters a securing fit (i.e. Latch in engaged position) when the torsion clip is applied to a substrate. The stop acts as a surface against which the gripping surfaces may urge a substrate to effect a pinching grip on the substrate and therefore allow the torsion clip to provide the fixation function.

Preferable the torsion clip further comprises at least one resilient skirt or resilient leg arranged in opposition to the gripping surfaces. Here skirt or leg refers to any suitable structure that urges a substrate words the gripping surfaces. Urging the substrate towards the gripping surfaces ensures an effective grip of the substrate by the torsion clip and a successful fixation.

Suitably, the at least one resilient skirt or resilient leg is arranged at least partially on the at least one stop. In this way the pinching grip between the resilient leg or resilient skirt and the gripping surfaces is further improved. It is noted that the torsion clip may comprises both a resilient leg and a resilient skirt, the presence of one does not prevent or hinder the presence of the other.

Appositely, at least one of the four gripping surfaces is ramped such that the ramp reaches a maximum height towards a centre of the two opposing pairs. Here "centre" of the two opposing pairs, with reference to the quadrilateral description above, refers to the intersection of lines drawn between the vertices of the quadrilateral (e.g. The centre of a square). The ramp allows a variety of widths of substrate to be gripped between the gripping surfaces and the stop or inconsistent widths of the same substrate may be adequately gripped.

Preferably, each of the four gripping surfaces is ramped so that each of the gripping surfaces can accommodate different substrates of varying width or a single substrate having varying width.

Suitably, the latch comprises a ridge, wherein the ridge reaches a maximum height towards the four gripping surfaces. In this way the latch may be self centering when inserted into an aperture of a substrate as the inclination of the ridge urges the latch away from the edge of the aperture and towards the centre of the aperture. Multiple ridges on the latch may be employed for this purpose.

Appositely, the torsion clip further comprises an insertion nose. The insertion nose provides a locating feature to allow the torsion clip to be located within the aperture of a substrate as well as a cover for the latch. The insertion nose may have a maximum cross-sectional area less than or equal to the maximum cross-sectional area of the gripping surfaces (or the quadrilateral described by the positions of the gripping surfaces).

Preferably, the torsion clip comprises a keyway operable to move the latch between the engaged position and a disengaged position. Suitably a key may, at a later date, be inserted into the keyway and the latch intentionally operated from the engaged position to the disengaged position. This allows the torsion clip to be intentionally removed and potentially reused.

Suitably, the keyway is located on the at least one stop, or when the torsion clip comprises an insertion nose, the keyway may be located on the insertion nose. The presence of an insertion nose does not mean that the keyway must be located in the insertion nose. The keyway may be located on the at least one stop while the torsion clip also comprises an insertion nose. The keyway may therefore be provided on either side of the torsion clip. Variations of the torsion clip are therefore possible with the ability to release the torsion clip via the keyway from different sides 9the stop end or the insertion nose end). It is also possible to equip a single torsion clip with keyways in both the stop end and insertion nose end so that it may be released via the keyway from either side. The word "keyway" refers to any suitable structure that can accept a suitably shaped tool to place suitable force upon the keyway to move the latch to the disengaged position. Such tool may be a key, screwdriver, hexagon bar, square bar or others.

According to the invention, the latch comprises an trap arranged to overpower or disengage the bias of the latch. As the latch is rotated via the keyway, the operator may choose to to rotate the latch into the trap, to hold the position of the latch in a desired location, whether the engaged position, disengaged position, or intermediate position. Typically the disengaged position will be selected as the latch is biased towards the engaged position. Trapping the latch in the disengaged position facilitates removal of the torsion clip.

The trap comprises a well arranged on the at least one stop and a finger arranged on the latch. The finger is capable of falling into the well an preventing further rotation of the latch. It should be noted that the trap may be permanent, preventing further rotation of the latch at all and locking the position, or, alternatively, the trap may be escapable upon an intentional action of an operator (e.g. Further operation of the keyway with an appropriate key).

Suitably, the torsion clip further comprises a dog house sized to capture and house the at least one stop. The dog house is arranged to receive the stop in a sliding fit so that the torsion clip may be retained by the dog house. The dog house may be formed in a first part of a vehicle or may be a separate element which prevents the torsion clip from passing through an aperture of the first part. The first part may be urged towards a second part of a vehicle where the torsion clip is urged through an aperture of the second part. The gripping surfaces grip and pinch the second part to the stop and the dog house retains the stop on the first part. In this way an effective fixation may be achieved.

### BRIEF DESCRIPTION OF THE DRAWINGS

Embodiments of the invention are now described, by way of example only, hereinafter with reference to the accompanying drawings.
FIG. 1 shows A) a side view of a torsion clip and B) a bottom view of a torsion clip.
FIG. 2 shows a perspective view of a torsion clip and a dog house.
FIG. 3 shows a torsion clip with dog house in proximity with a substrate.
FIG. 4 shows A) a torsion clip attaching a first part to a second part and B) a latch of a torsion clip in place in a substrate.
FIG. 5 shows A) alignment of a first part, second part, and torsion clips and B) connection of a first part and a second part via torsion clips.
FIG. 6 shows a top view of a torsion clip.
FIG. 7 shows A) a top perspective view of an alternative torsion clip and B) a bottom perspective view of an alternative torsion clip.

### DETAILED DESCRIPTION

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly', 'outer' and 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled' and 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second" and "third" etc. merely indicate that different instances of like objects are being referred to and are not intended to imply that the objects so described must be in a given sequence, either temporally, spatially, in ranking or in any other manner.

Like reference numerals are used to depict like features throughout.

The present invention relates to a torsion clip, in particular a torsion clip with 4 contact points, an innovative technology to replace screws & nuts with an associated assembly time reduction, just "snap-in" to install, with high serviceability and strong retention.

The present invention is characterised in particular by the fact that the torsion clip has an assembly time reduction by snap-in to a hole in vehicle BIW (body in white), with no screwdrivers used, and no additives, as well as requiring less components to be delivered on the car line (Pre-assembled at the tiers one in most of cases).

According to the present invention, the torsion clip is ergonomic, designed for low insertion force, with a locked position between the pin and cage if needed (in case of several torsion clips to be dismounted).

According to the present invention, the torsion clip is robust and versatile with a high holding force depending on the sheet metal thickness (Over 60 daN).

According a further aspect of the invention the torsion clip is reusable an unlimited number of times without plastic deformation (there is a breakout point stopper between the pin & cage to avoid breakage and no stress is applied to the torsion clip after installation).

Furthermore, the torsion clip is customizable, with different versions already existing for a wide range of applications.

Torsion clips utilize a patented torsion bar that twists when pushed into a hole. Once fixed, the bar springs back to its original position under the sheet metal. This torsion bar makes assembly easy and secure, guaranteeing low insertion and strong retention forces. No tool is required to assemble the parts, just manually push the part into the corresponding hole.

The torsion clip technology has a wide range of possible applications in the vehicle, and different customizable designs to meet all specifications.

The technical features of the present invention are shown in the attached figures and can be taken from them.

A torsion clip with 4 contact points is proposed. The torsion clip has an assembly time reduction, just "snap-in" to install, with high serviceability and strong retention.

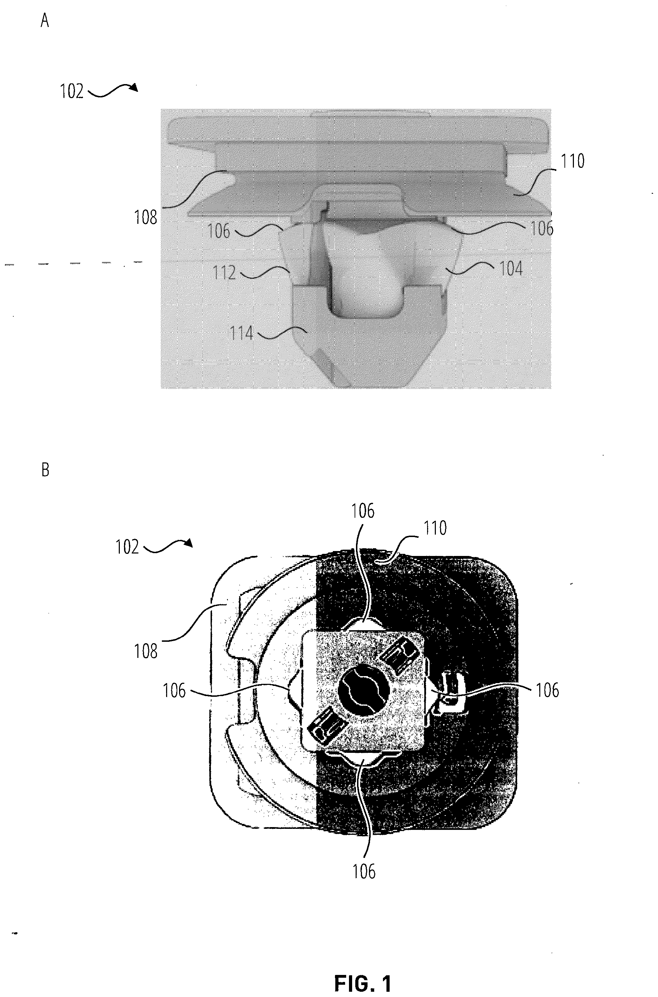

FIG. 1 A) and B) show a torsion clip 102. The torsion clip 102 has a latch 104 which rotates between an engaged position and a disengaged position. In the engaged position gripping surfaces 106 are placed into an interfering position with any substrate located between the latch 104 and a stop 108. The latch 104 is connected to the stop 108 so a substrate placed between the latch 104 and stop 108 is trapped by the gripping surfaces 106 when latch 104 is in the engaged position.

The torsion clip 102 may be provided with a resilient skirt 110 or other suitable resilient member, such as a resilient leg, arranged to urge the substrate away from the stop 108 and towards the gripping surfaces 106 to ensure a tight grip of the substrate by the torsion clip 102.

Similarly, the gripping surfaces 106 may be provided with a ramp to urge the substrate towards the stop 108 or to ensure the gripping surfaces engage with substrates of varying thicknesses (as the distance between the stop 108 and the gripping surfaces 106 is fixed).

The latch 104 is provided with one or more ridges 112, generally aligned with the gripping surfaces 106. The ridges 112 have a maximum towards the latch 104 and a minimum towards an end of the latch 104 that first encounters a substrate in use. In this way a substrate is guided into position on the torsion clip by following the ridges 112, the torsion clip 102 is therefore self-centering within an aperture of a substrate.

An insertion nose 114 is further provided adjacent the end of the latch 104 which encounters the substrate first, in use. The insertion nose 114 provides a locator with which it is easy to find an aperture and commence insertion of the torsion clip. The insertion nose 114 is stationary with respect to the latch 104 (it does not rotate with the 104 between the engaged and disengaged positions).

The ridges 112 also allow the torsion clip to have a snap-fit within an aperture of a substrate, the latch is biased towards the engaged position, but on urging the torsion clip into an aperture of a substrate the ridges 112 action/interference with the aperture urge the latch into the disengaged position, allowing the torsion clip to pass through the aperture. Once the maximum of the ridges passes through the aperture, the torsion clip snaps to the engaged position due to the biasing means and traps the substrate between the gripping surfaces 106 and the stop 108.

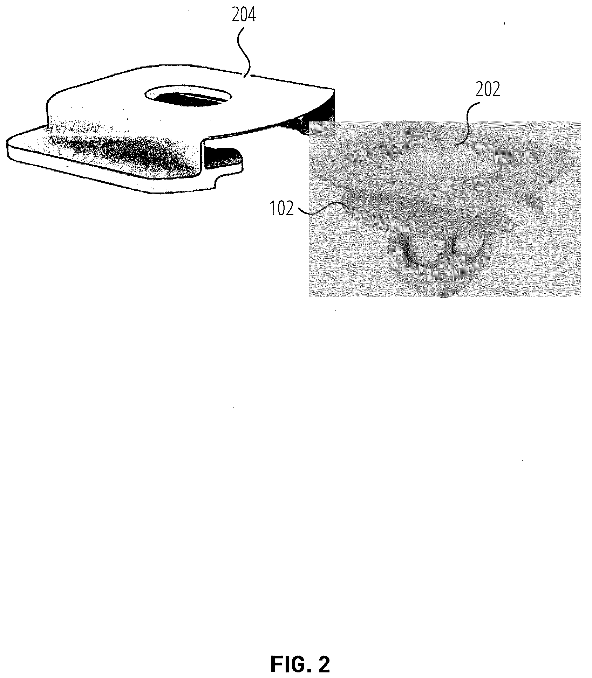

FIG. 2 shows the torsion clip 102 of FIG. 1, in which a keyway 202 is visible. The keyway 202 provides a handle or slot for a tool to grasp to allow manual rotation by a user to move the latch between the engaged position and the disengaged position (it is noted a latch may be biased towards either position or none).

A dog house 204 may be used for easy positioning or location of the torsion clip 102 on a first part. The dog house 204 is sized to trap and hold the stop of the torsion clip 102 thereby attaching the torsion clip 102 to the first part. The dog house may be provided with an aperture to allow access to the keyway 202.

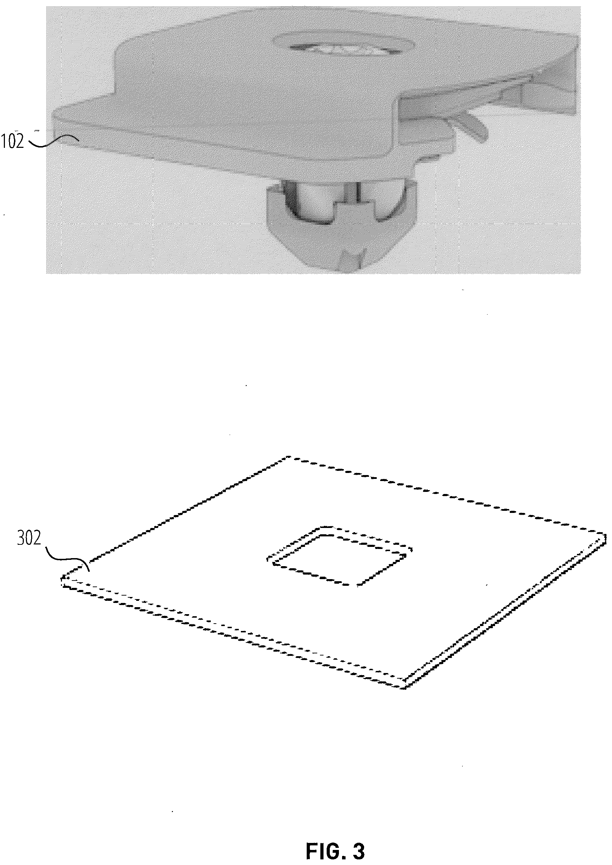

FIG. 3 shows the torsion clip 102 of FIG. 1 and FIG. 2 with the stop trapped within the dog house. The torsion clip 102 is aligned with a substrate 302 having a aperture into which the insertion nose and then the latch 104 is urged.

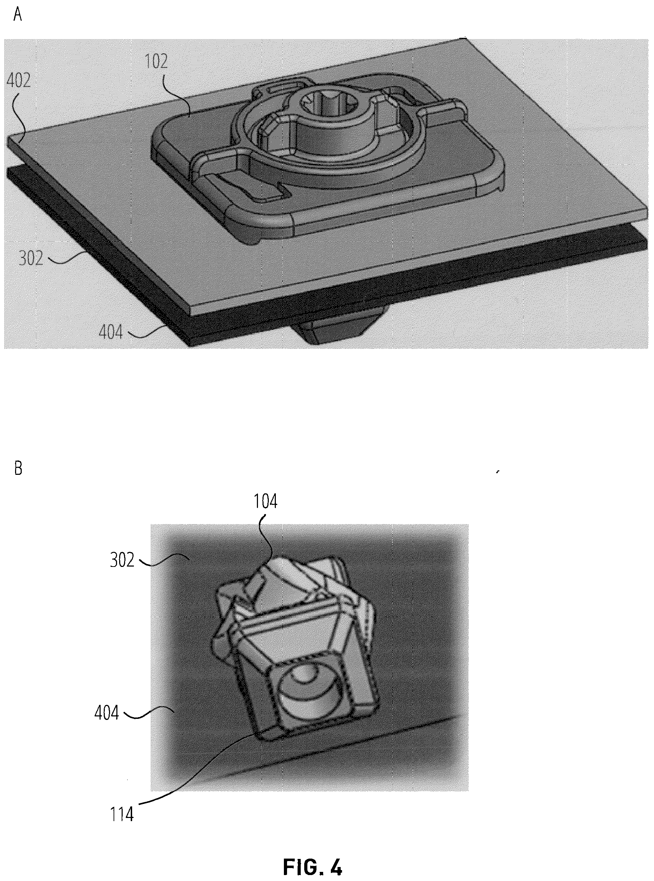

FIG. 4 A) and B) show the torsion clip 102 of FIG. 1 and FIG. 2. A first part 402 is held by the stop (the stop may act to hold multiple parts). An aperture of the first part may be larger than the latch 104 so as to not interfere with the latch, alternatively, the latch 104 may be capable of accommodating multiple substrates between the gripping surfaces 106 and the stop. As shown in FIG. 4 A) a second part 404 is held adjacent the first part 402 via the latch.

This is better seen in FIG. 4 B) which shows an under-side view of the second part 404. The latch protrudes through an aperture in the second part 404, the latch is biased to the engaged position and rotates the gripping surfaces into an interfering fit wit h the second part 404 thereby preventing unintentional return of the latch 104 through the aperture in the second part 404. The insertion nose 114 provides a rounded surface to the torsion clip 102 and some protection to the latch 104 from accidental impacts which may impair the function of the latch 104.

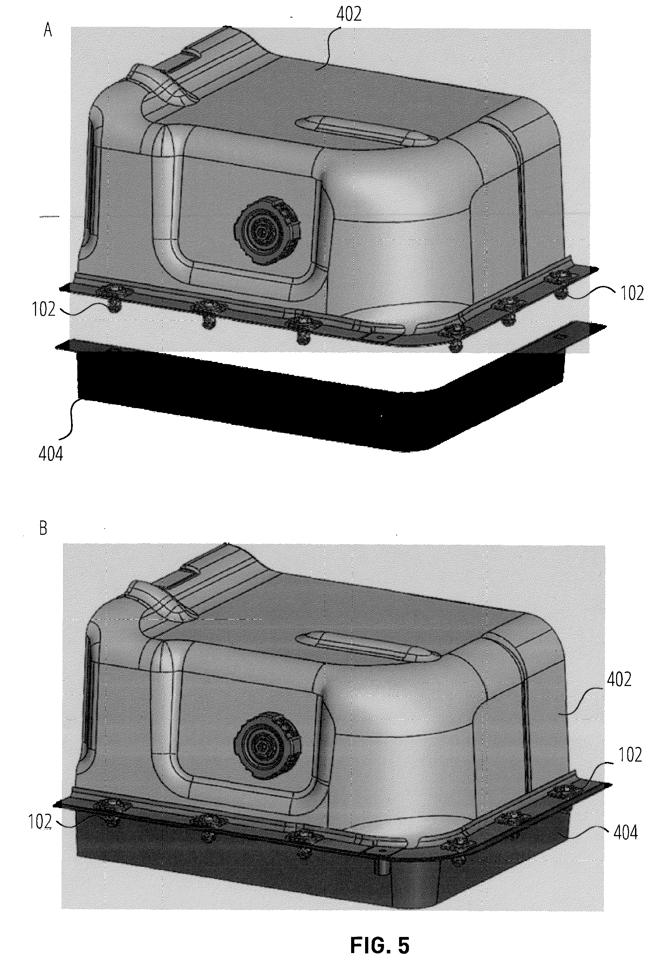

FIG. 5 A) and B) show full views of the first part 402 and second part 404 as seen in FIG. 4, which may be, for example, a battery casing for a vehicle. Multiple torsion clips 102 may be used about a perimeter of the parts and effective fixation of both parts to one another achieved by urging the second part 404 towards the first part 402. As the torsion clips 102 are snap-fit effective connection may be achieved by hand placement alone without the need to tools and therefore obtaining a reduction in manufacturing time. The first part 402 may be manufactured with the torsion clips 102 pre-placed, therefore avoiding the need for an operative to install the torsion clip 102 during vehicle production.

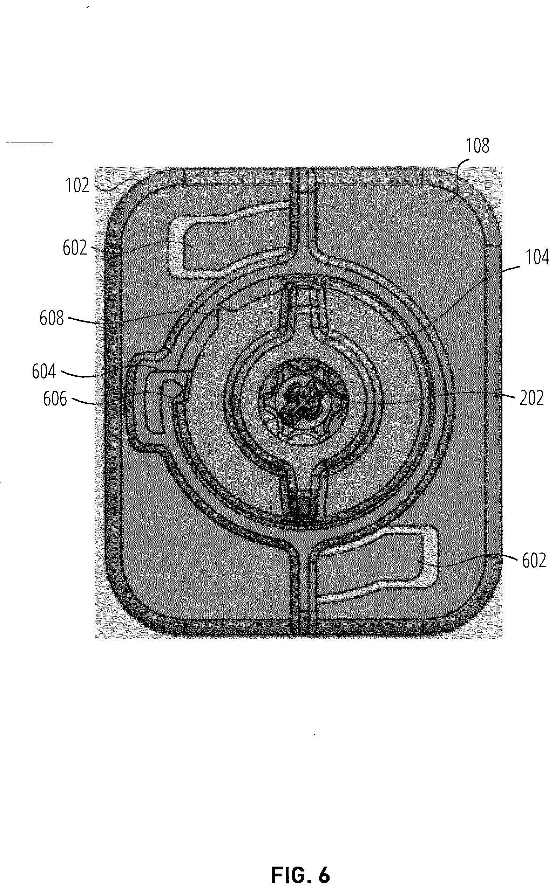

FIG. 6 is a top-down view of a torsion clip 102 sharing the same features as the torsion clip 102 of FIG. 1 and FIG. 2, except the resilient skirt is swapped for resilient legs 602 instead, which provide the same function in a different format. A keyway 202 is visible in the top and connected to the latch (not shown). The keyway 202 is connected to a trap 604 which is capable of locking the position of the latch in a defined position, such as, in the disengaged position, thereby overriding the biasing means urging the latch into the engaged position. Any suitable trap may be used to achieve this function. The trap 604 in FIG. 6 comprises a well 606 and a finger 608, as the keyway 202 is rotated the finger 608 falls in the well 606 and the latch 104 held in the predetermined position. The trap may be permanent, but is normally releaseble to allow the latch to return, via the biasing means, to the engaged position. The trap 604 is useful to lock the torsion clip 102 into the disengaged position which facilitates removal, especially where, as shown in FIG. 5, parts may be provided with a plurality of torsion clips which would be unwieldy to all hold in a disengaged position against the respective biasing means of each torsion clip.

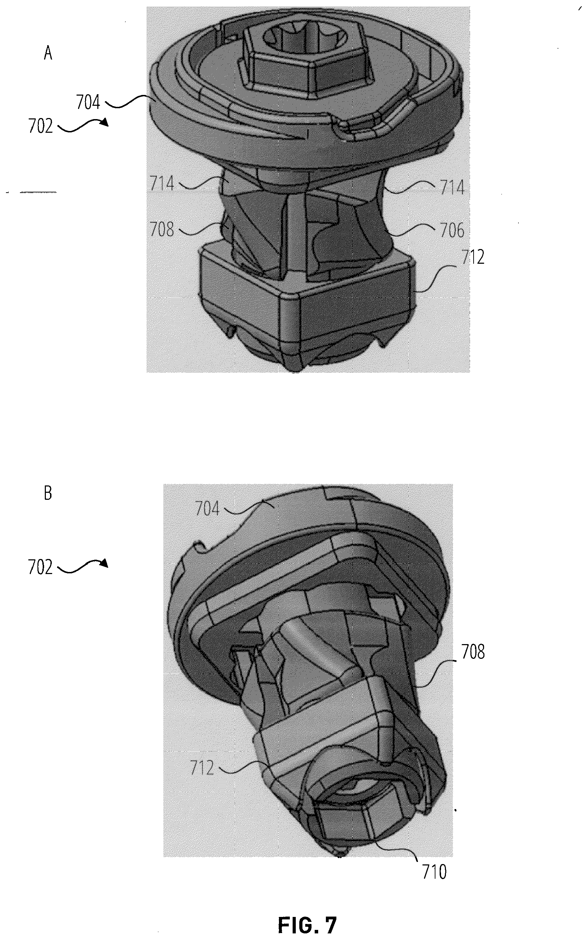

FIG. 7 shows an alternative torsion clip 702, similar to the torsion clip 102 of FIG. 1 and having a stop 704, ridge 706, latch 708, insertion nose 712, and gripping surfaces 714. The torsion clip 702 functions in the same manner as the torsion clip 102 of FIG. 1. Torsion clip 702 differs in the location of the keyway 710, which in located in the insertion nose 712 instead of the stop 704. A second keyway may be present in the stop 704. The point of locating the keyway in one or both of the stop or insertion nose 712 it to allow removal of the torsion clip 702 from either side, for example, if it is clear that the torsion clip 702 will only be accessible from a single side in a constructed vehicle, the keyway can be located on the appropriate side to allow for removal of the torsion clip 702.

It will be appreciated by persons skilled in the art that the above detailed examples have been described by way of example only and not in any limitative sense, and that various alterations and modifications are possible without departing from the scope of the invention as defined by the appended claims. Various modifications to the detailed examples described above are possible.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. **In** particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments.

## Claims

1. A torsion clip (102) comprising:
a latch (104) rotateable between an engaged position and a disengaged position, wherein the latch (104) is biased towards the engaged position, the latch (104) comprising four gripping surfaces (106) arranged in two opposing pairs, the two opposing pairs arranged perpendicular to one another, and
at least one stop (108) arranged in opposition to the gripping surfaces (106),
wherein the latch (104) comprises a trap (604) arranged to overpower or disengage the bias of the latch (104), said trap comprising a well (606) arranged on the at least one stop (108) and a finger (608) arranged on the latch (104).

2. The torsion clip (102) of claim 1 further comprising at least one resilient skirt (110) or resilient leg (110) arranged in opposition to the gripping surfaces (106).

3. The torsion clip (102) of claim 2 wherein the at least one resilient skirt (110) or resilient leg (110) is arranged at least partially on the at least one stop (108).

4. The torsion clip (102) of any one of claims 1 to 3 wherein at least one of the four gripping surfaces (106) is ramped such that the ramp reaches a maximum height towards a centre of the two opposing pairs.

5. The torsion clip (102) of claim 4 wherein each of the four gripping surfaces (106) is ramped.

6. The torsion clip (102) of any one of claims 1 to 5 wherein the latch (104) comprises a ridge (112), wherein the ridge (112) reaches a maximum height towards the four gripping surfaces (106).

7. The torsion clip (102) of any one of claims 1 to 6 wherein the torsion clip (102) further comprises an insertion nose (114).

8. The torsion clip (102) of any one of claims 1 to 7 wherein the torsion clip (102) comprises a keyway (202) operable to move the latch (104) between the engaged position and a disengaged position.

9. The torsion clip (102) of claim 8 wherein the keyway (202) is located on the at least one stop (108), or when dependent upon claim 7, the keyway (202) is located on the insertion nose (114).

10. The torsion clip (102) of any one of claims 1 to 9 further comprising a dog house (204) sized to capture and house the at least one stop (108).

## Patentansprüche

1. Torsionsklemme (102), aufweisend:
eine Verriegelung (104), die zwischen einer verriegelten Position und einer gelösten Position drehbar ist, wobei die Verriegelung (104) in Richtung der verriegelten Position vorgespannt ist, wobei die Verriegelung (104) vier Greifflächen (106) aufweist, die in zwei gegenüberliegenden Paaren angeordnet sind, wobei die zwei gegenüberliegenden Paare senkrecht zueinander angeordnet sind, und
mindestens einen Anschlag (108), der gegenüber den Greifflächen (106) angeordnet ist,
wobei die Verriegelung (104) eine Sperre (604) aufweist, die angeordnet ist, um die Vorspannung der Verriegelung (104) zu überwinden oder zu lösen, wobei die Sperre eine Vertiefung (606) aufweist, die an dem mindestens einen Anschlag (108) angeordnet ist, und einen Finger (608), der an der Verriegelung (104) angeordnet ist.

2. Torsionsklemme (102) nach Anspruch 1, ferner aufweisend mindestens eine elastische Schürze (110) oder mindestens einen elastischen Schenkel (110), die bzw. der gegenüber den Greifflächen (106) angeordnet ist.

3. Torsionsklemme (102) nach Anspruch 2, wobei die mindestens eine elastische Schürze (110) oder der mindestens eine elastische Schenkel (110) mindestens teilweise an dem mindestens einen Anschlag (108) angeordnet ist.

4. Torsionsklemme (102) nach einem der Ansprüche 1 bis 3, wobei mindestens eine der vier Greifflächen (106) derart abgeschrägt ist, dass die Abschrägung zu der Mitte der zwei gegenüberliegenden Paare hin eine maximale Höhe erreicht.

5. Torsionsklemme (102) nach Anspruch 4, wobei jede der vier Greifflächen (106) abgeschrägt ist.

6. Torsionsklemme (102) nach einem der Ansprüche 1 bis 5, wobei die Verriegelung (104) eine Rippe (112) aufweist, wobei die Rippe (112) zu den vier Greifflächen (106) hin eine maximale Höhe erreicht.

7. Torsionsklemme (102) nach einem der Ansprüche 1 bis 6, wobei die Torsionsklemme (102) ferner eine Einführnase (114) aufweist.

8. Torsionsklemme (102) nach einem der Ansprüche 1 bis 7, wobei die Torsionsklemme (102) eine Nut (202) aufweist, die betätigbar ist, um die Verriegelung (104) zwischen der verriegelten Position und einer gelösten Position zu bewegen.

9. Torsionsklemme (102) nach Anspruch 8, wobei die Nut (202) an dem mindestens einen Anschlag (108) befindlich ist, oder, wenn von Anspruch 7 abhängig, die Nut (202) an der Einführnase (114) befindlich ist.

10. Torsionsklemme (102) nach einem der Ansprüche 1 bis 9, die ferner eine Abdeckung (204) aufweist, die so bemessen ist, dass sie den mindestens einen Anschlag (108) aufnimmt und unterbringt.

## Revendications

1. Clip de torsion (102) comprenant :
un verrou (104) rotatif entre une position engagée et une position désengagée, dans lequel le verrou (104) est sollicité vers la position engagée, le verrou (104) comprenant quatre surfaces de préhension (106) agencées en deux paires opposées, les deux paires opposées étant agencées perpendiculairement l'une à l'autre, et
au moins une butée (108) agencée en opposition aux surfaces de préhension (106),
dans lequel le verrou (104) comprend un piège (604) agencé pour vaincre ou désengager la sollicitation du verrou (104), ledit piège comprenant un puits (606) agencé sur au moins une butée (108) et un doigt (608) agencé sur le verrou (104).

2. Clip de torsion (102) selon la revendication 1, comprenant en outre au moins une jupe élastique (110) ou une patte élastique (110) agencée en opposition aux surfaces de préhension (106).

3. Clip de torsion (102) selon la revendication 2, dans laquelle au moins une jupe élastique (110) ou une patte élastique (110) est agencée au moins partiellement sur au moins une butée (108).

4. Clip de torsion (102) selon l'une quelconque des revendications 1 à 3, dans lequel au moins l'une des quatre surfaces de préhension (106) est profilée en rampe, de telle sorte que la rampe atteigne une hauteur maximale vers un centre des deux paires opposées.

5. Clip de torsion (102) selon la revendication 4, dans lequel chacune des quatre surfaces de préhension (106) est profilée en rampe.

6. Clip de torsion (102) selon l'une quelconque des revendications 1 à 5, dans lequel le verrou (104) comprend une nervure (112), dans lequel la nervure (112) atteint une hauteur maximale vers les quatre surfaces de préhension (106).

7. Clip de torsion (102) selon l'une quelconque des revendications 1 à 6, dans lequel le clip de torsion (102) comprend en outre un nez d'insertion (114).

8. Clip de torsion (102) selon l'une quelconque des revendications 1 à 7, dans lequel le clip de torsion (102) comprend une rainure de clavette (202) configurée pour déplacer le verrou (104) entre la position engagée et une position désengagée.

9. Clip de torsion (102) selon la revendication 8, dans lequel la rainure de clavette (202) est située sur au moins une butée (108), ou, lorsqu'elle dépend de la revendication 7, la rainure de clavette (202) est située sur le nez d'insertion (114).

10. Clip de torsion (102) selon l'une quelconque des revendications 1 à 9, comprenant en outre une « dog house » (204) dimensionnée pour capturer et loger au moins une butée (108).
